# EUROPEAN PATENT SPECIFICATION

(11) **EP 4 047 134 B1**
(45) Date of publication and mention of the grant of the patent: **27.12.2023**
(21) Application number: 22158132.5
(22) Date of filing: 23.02.2022
(51) Int. Cl.: E02B 3/26

(54) **MULTI-FUNCTION SAFETY DEVICE FOR PNEUMATIC FENDER**
MULTIFUNKTIONS-SICHERHEITSVORRICHTUNG FÜR EINEN PNEUMATISCHEN KOTFLÜGEL
DISPOSITIF DE SÉCURITÉ MULTIFONCTIONS POUR DÉFENSE PNEUMATIQUE

(30) Priority: 23.02.2021 KR 20210024128
(43) Date of publication of application: 24.08.2022
(73) Proprietor: Hwaseung Corporation Co., Ltd., Busan 47540 (KR); Lee, Seong Jae, Gangwon-do 26503 (KR)
(72) Inventor: YUN, Soon Hwan, Busan, 47904 (KR); KONG, Kyoung Hwan, Busan, 47153 (KR); LEE, Seong Jae, Gangwon-do, 26503 (KR)
(74) Representative: Cabinet Beau de Loménie

(56) References cited:
- EP-A1- 3 128 082
- CN-U- 208 457 276
- KR-B1- 102 162 839

## Description

### [Technical Field]

The present invention relates to a multi-function safety device for a pneumatic fender, and specifically, to a multi-function safety device for a pneumatic fender that can significantly reduce a weight, and is compatible with a conventional safety valve for a pneumatic fender for easy replacement, by providing all of a first valve, a second valve, a safety valve, a pneumatic test part and a manual test part in the multi-function safety device so that a separate accommodating chamber is not required.

### [Background Art]

The pneumatic fender sealed with an appropriate amount of air is placed between a ship and a berth or between a ship and a ship to absorb the flow energy of the ship and make the ship safer. If the flow energy of the ship is excessive and out of the limit range that the fender can absorb, there is a risk of the fender being damaged. A safety valve is installed to prevent such damage (Korean Patent Application Laid-Open No. 10-2009-0016036) .

A pneumatic fender periodically replenishes air to maintain a predetermined internal pressure. However, in order to check the abnormality of the safety valve in the fender in use, the internal pressure of the pneumatic fender is discharged to the outside air, and then the safety valve is separated from the connection flange of the pneumatic fender so that the opening pressure of the safety valve is checked and repaired, and then installed in a bracket again. Then, an appropriate amount of air is supplied inside the pneumatic fender and the pneumatic fender is sealed to be in use. Such maintenance is problematic in that it consumes a lot of money and time.

In order to solve this problem, as shown in FIG. 2 of Korean Patent Application Laid-Open No. 10-2016-0102575, an opening and closing valve 9 closes a through hole 7a formed in a partition wall 7 constituting an accommodating chamber 8 by a pressing member 10, so that an attempt has been made to test the opening pressure of the safety valve of the pneumatic fender in use, or to detach the safety valve in some cases.

However, in the case of a mouthpiece configured with the structure described in Korean Patent Application Laid-Open No. 10-2016-0102575, for the test of the safety valve and the opening and closing valve, the opening and closing valve 9 is closed by the pressing member in 5% or more and 20% or less of an initial internal pressure (repulsion force of the spring set higher than the initial internal pressure) in a normal state and is not operated by the initial internal pressure, so that it cannot check whether the opening and closing valve operates. In some cases, a limit pressure may not be transmitted to the safety valve if the internal pressure of the pneumatic fender reaches the limit pressure due to the sticking of the opening and closing valve. The seat part corresponding to the opening and closing valve is formed directly on the partition wall 7 adjacent to the through hole 7a formed in the accommodating chamber 8, so that when the opening and closing valve and the seat part are damaged, there is a problem of removing the entire accommodating chamber 8 of the mouthpiece from the fender for repairing.

In addition, as shown in FIG. 3 of Korean Patent Application Laid-Open No. 10-2016-0138386, the opening and closing valve 9 closes the through hole 7a formed in the partition wall 7 constituting the accommodating chamber 8 by using a fixing member 5b, so that attempts have been made to test the opening pressure of the safety valve of the pneumatic fender in use or to detach the safety valve in some cases.

However, in the mouthpiece configured with the structure described in Korean Patent Application Laid-Open No. 10-2016-0138386, the seat part corresponding to the opening and closing valve is formed directly on the partition wall 7 adjacent to the through hole 7a formed in the accommodating chamber 8, so that when the seat part is damaged, there is a problem in that the entire accommodating chamber 8 of the mouthpiece needs to be separated from the fender for repairing.

In addition, as described in Korean Patent Laid-Open No. 10-1882378, by using the disk 240 of the opening and closing valve 200 to close a passage hole 217b in a thickness direction formed in a body 210, attempts have been made to test the opening pressure of the safety valve of the pneumatic fender in use or to detach the safety valve in some cases.

However, in the mouthpiece configured with the structure described in Korean Patent Laid-Open No. 10-1882378, since an accommodating chamber 120 is configured with an upper wall 121, a lower wall 123, a lower wall installation part 123a, a side wall 124, and a protruding plate 125 for the installation of the safety valve and the opening and closing valve, there is a problem in that a manufacturing cost is increased and a weight is increased more than twice.

In addition, as described in Korean Patent Laid-Open No. 10-2162839, attempts have been made to test the opening pressure of the safety valve of the pneumatic fender in use or to detach the safety valve in some cases by rotating a ball 21 with an operation lever 25 of an opening and closing valve 20 to close a through passage 21a.

However, since the mouthpiece configured with the structure described in Korean Patent Laid-Open No. 10-2162839 has a structure that requires the separate open-type accommodating chamber 120 for installation of a complex valve, there is a problem in that a manufacturing cost is increased and a weight is increased by 1.5 times.

A common feature of the structures described in Korean Patent Application Laid-Open No. 10-2016-0138386, Korean Patent Application Laid-Open No. 10-2016-0102575, Korean Patent Laid-Open No. 10-1882378, and Korean Patent Laid-Open No. 10-2162839 has a disadvantage in that the safety valve and the opening and closing valve have to be installed in a separate accommodating chamber, respectively, to perform their intended functions, and when they are installed on the conventional pneumatic fender, the accommodating chamber has to be separately manufactured and installed, so there are many problems in compatibility.

### [Document of Related Art]

### [Patent Document]

(Patent Document 0001) Korean Patent Application Laid-Open No. 10-2009-0016036 (2009.02.13)
(Patent Document 0002) Korean Patent Application Laid-Open No. 10-2016-0138386 (2016.12.05)
(Patent Document 0003) Korean Patent Application Laid-Open No. 10-2016-0102575 (2016.08.30)
(Patent Document 0004) Korean Patent Laid-Open No. 10-1882378 (2018.05.17)
(Patent Document 0005) Korean Patent Laid-Open No. 10-2162839 (2020.09.28)
Also, documents CN208457276U and EP3128082 disclose safety devices of a type relevant for the subject matter of the claims.

### [DISCLOSURE]

### [Technical Problem]

The present invention is proposed to solve the above problems, and provides a multi-function safety device for a pneumatic fender which can perform the test for the presence or absence of abnormality of a safety valve mounted on a flange fixed to a bracket of the multi-function safety device for the pneumatic fender in use without removing the safety valve from the flange fixed to the bracket of the multi-function safety device for the pneumatic fender, separate and install the safety valve from and to the flange fixed to the bracket of the multi-function safety device for the pneumatic fender without releasing the pressure inside the multi-function safety device for the pneumatic fender, and be easily compatible and applicable with the conventional multi-function safety device for the pneumatic fender.

### [Technical Solution]

In order to solve the above problems, an embodiment of the present invention provides a multi-function safety device for a pneumatic fender that is configured to be installed at a berth of a pier to serve as a buffer in case of collision between a ship and the berth, the multi-function safety device for the pneumatic fender includes a first valve body that is provided at an end of the pneumatic fender and controls incoming and outgoing of air; a first valve that is installed so as to be detachable from the first valve body and opens and closes communication of air inside and outside the pneumatic fender by communicating an inside of the pneumatic fender with a first accommodating space provided in a first body included in the first valve body; a second valve body that is installed in the first accommodating space and is provided with a second accommodating space so that the air inside the pneumatic fender is accommodated through a second valve; the second valve that is disposed on a lower portion of the second valve body to prevent the air of a test pressure provided for a pneumatic test of a safety valve from flowing into the pneumatic fender; the safety valve that is installed in the second accommodating space and is provided with an outlet for discharging the air to an outside through a through passage and a connection passage of the first valve body and a through passage of the second valve body when an internal pressure of the pneumatic fender is greater than or equal to a preset pressure; a pneumatic test part that is disposed in the safety valve and is provided to perform a pneumatic operation test of the safety valve; and a manual test part that is disposed on a protective cover formed on an upper portion of the safety valve and is provided for a manual operation test of the safety valve. The first valve, the second valve, the safety valve, the pneumatic test part, and the manual test part are provided in the first valve body, so that a separate accommodating chamber is unnecessary, and a volume and a weight are reduced.

As an example, the through passage for communicating between the inside of the pneumatic fender and the safety valve is provided in the first valve body and the second valve body, and the opening and closing of the first valve and the second valve may be automatically controlled by a use condition including a pressure applied to the pneumatic fender.

In this case, the connection passage connected to the through passage under the safety valve may be provided in the first valve body.

In addition, the present invention provides a method for checking a pneumatic fender by using the multi-function safety device for the pneumatic fender as described above, including at least one of after allowing a threaded part of an auxiliary bolt to pass through the manual test part, checking whether a disk of the safety valve is open by using the auxiliary bolt; and after allowing a compressed air to pass through the pneumatic test part and to be supplied to the second accommodating space in which the safety valve is installed, checking an opening pressure. The method is performed in a state in which the internal pressure of the pneumatic fender is not released by the manual test part or the pneumatic test part.

In this case, when the safety valve and the second valve body are detached, the inside of the pneumatic fender and the connection passage are blocked by the first valve, so that the method is performed in a state in which the internal pressure of the pneumatic fender is not released.

In addition, the method may further include replacing the safety valve in a state in which the air inside the pneumatic fender is not released to an atmosphere.

### [Advantageous Effect]

According to an embodiment of the present invention, even in the case of the multi-function safety device that is installed on the flange of the bracket of the pneumatic fender and is in use, it is possible to check whether the safety valve is abnormal only by simple operation using the pneumatic test part or the manual test part.

In addition, in checking the operation of the safety valve periodically, the present invention can test the opening pressure of the safety valve by supplying compressed air through the pneumatic test part of the multi-function safety device that communicates with the inside of the pneumatic fender, or artificially test the opening of the safety valve by the manual test part, without separating the safety valve from the pneumatic fender. In some cases, when repair or replacement of the safety valve is required, workability can be greatly improved by performing it without releasing the air inside the multi-function safety device for the pneumatic fender to the atmosphere.

In addition, even when a problem with the multi-function safety device occurs, time and cost can be significantly reduced by easily removing, repairing and exchanging the multi-function safety device from the flange of the bracket of the pneumatic fender.

### [Description of Drawings]

FIG. 1 is a cross-sectional view of a pneumatic fender according to an embodiment of the present invention.
FIG. 2 is a plan view of a pneumatic fender according to an embodiment of the present invention.
FIG. 3 is a cross-sectional view of a flange of a pneumatic fender according to an embodiment of the present invention.
FIG. 4 is a cross-sectional view of a multi-function safety device in a normal state according to an embodiment of the present invention.
FIG. 5 is a cross-sectional view of a multi-function safety device in an open pressure state according to an embodiment of the present invention.
FIG. 6 is a cross-sectional view of a multi-function safety device when tested through a pneumatic test part according to an embodiment of the present invention.
FIG. 7 is a cross-sectional view of a multi-function safety device when testing through a manual test part according to an embodiment of the present invention.
FIG. 8 is a cross-sectional view of a multi-function safety device when a safety valve and a second valve body are detached according to an embodiment of the present invention.

### [Mode for Invention]

Hereinafter, a multi-function safety device of a pneumatic fender according to the present invention will be described with reference to the accompanying drawings.

In the present invention, a pneumatic fender in normal use refers to a state in which a first and second valves are opened, and in this case, the internal pressure of the pneumatic fender affects the pressure applied to the safety valve installed in a second accommodating space after passing through a first accommodating space. Thus, when the internal pressure is applied above a preset pressure by a flow energy of a ship, the safety valve is opened and the air inside the pneumatic fender is released to the atmosphere to protect the pneumatic fender, which is a basic operation of the pneumatic fender.

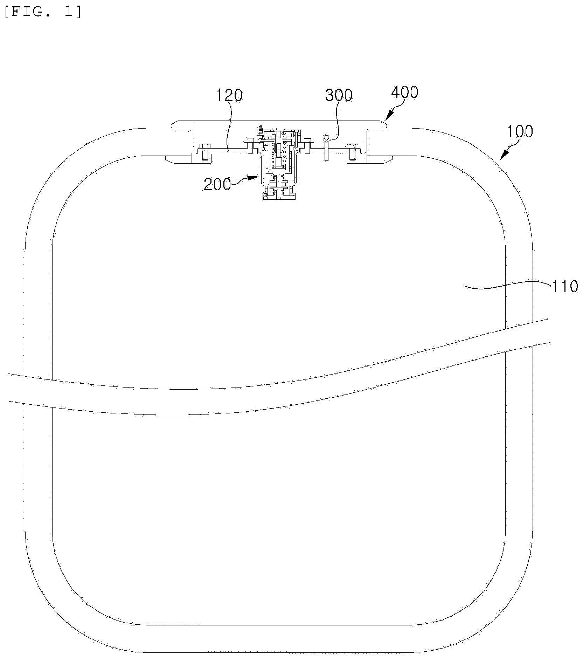

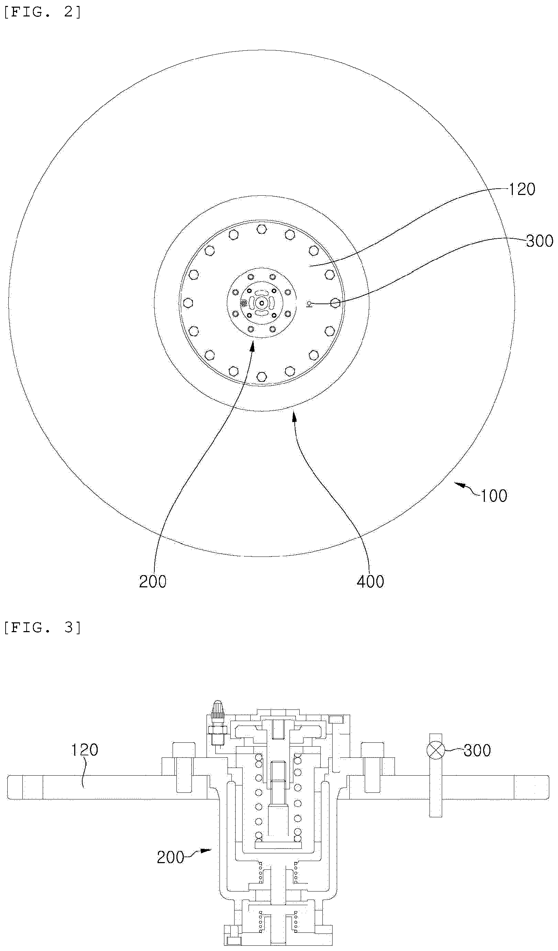

FIGS. 1 and 2 show a cross-sectional view and a plan view of a pneumatic fender according to an embodiment of the present invention, respectively.

Referring to FIGS. 1 and 2, a pneumatic fender 100 includes a bracket 400 provided on at least one side of the pneumatic fender 100 and a flange 120 installed in the bracket 400.

At least one bracket 400 may be installed, for example, it may have a cylindrical concave shape, or a form in which an opening is covered with a lid by a bolt and the like.

The flange 120 is in the form of a plate extending outwardly from the pneumatic fender 100, and after being seated on the bracket 400, it may be fixedly installed on the bracket 400 by a method such as bolting, etc. In this case, a multi-function safety device 200 and an air injection valve 300 are installed on the flange 120, and the specific configuration will be described later.

FIG. 3 is a cross-sectional view of the flange 120 of the pneumatic fender 100 according to an embodiment of the present invention.

Referring to FIG. 3, the flange 120 is in the form of a plate extending outwardly from the pneumatic fender 100 as described above, and after being seated on the bracket 400, it is fixed to the bracket 400 by bolting or the like. In the center of the flange 120, a through hole is provided so that the multi-function safety device 200 can be inserted and installed, and the air injection valve 300 is installed on one side.

The air injection valve 300 injects compressed air to the inside 110 of the pneumatic fender to expand the pneumatic fender 100 to perform of maintaining it in a normal use state, or artificially ejecting the compressed air of the inside 110 of the pneumatic fender.

The multi-function safety device 200 may communicate with the inside 110 of the pneumatic fender, and may be inserted and installed from the upper portion of the flange 120 provided with the through hole. Accordingly, it is possible to check whether a safety valve 30 to be described later is abnormal without separating at least a portion of the multi-function safety device 200, for example, the safety valve 30, from the pneumatic fender 100. In addition, each structure and function of a first valve 13, a second valve 22, the safety valve 30, a pneumatic test part 37 and a manual test part 38b to be described later is therein, and is provided in the first valve body 10. Thus, it is directly connected to the flange 120 without installing a separate accommodating chamber in the bracket 400 of the pneumatic fender 100, so there is an effect of significantly reducing the volume and weight of the pneumatic fender 100 compared to the conventional art. In addition, the multi-function safety device 200 of the present invention can be easily installed interchangeably with a conventional pneumatic fender, thereby achieving a resource saving effect.

The multi-function safety device 200 according to the present invention can achieve remarkable effects with a structure differentiated from the conventional art, and will be described in detail below.

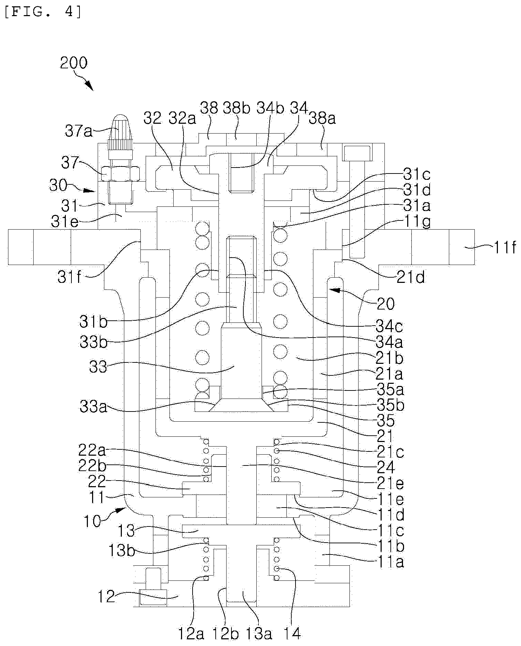

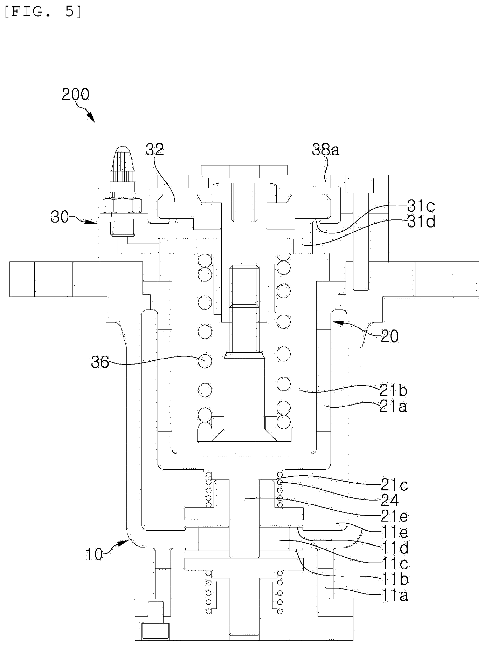

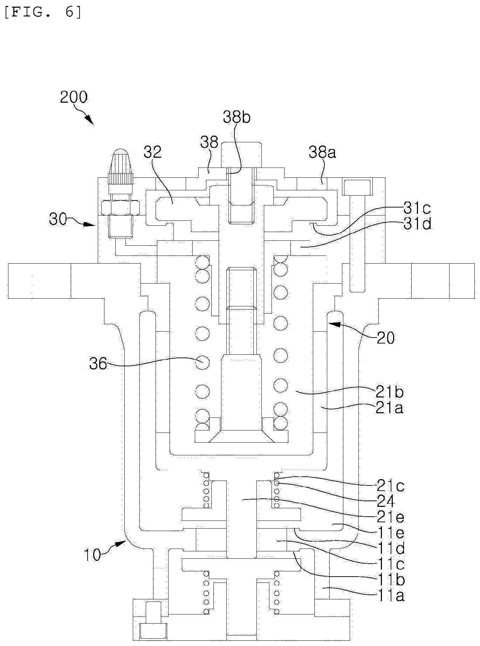

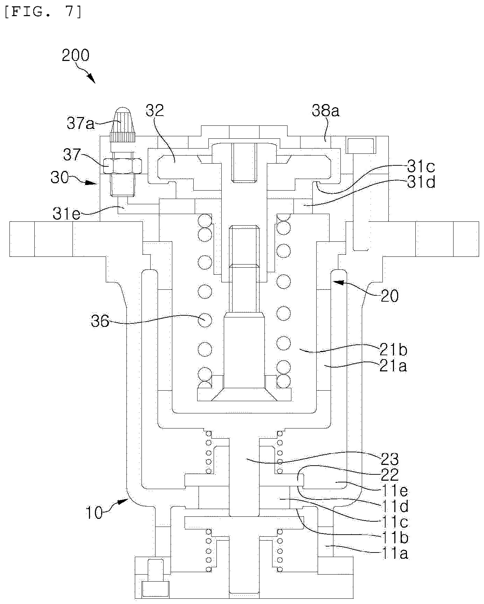

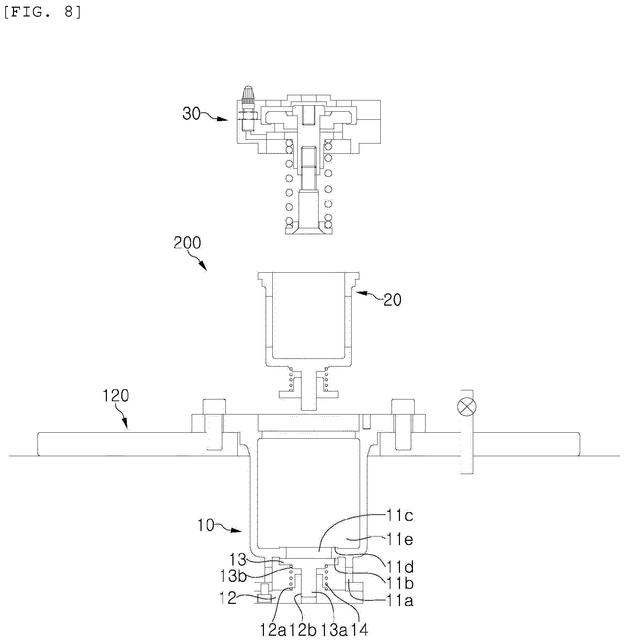

FIGS. 4 to 8 are cross-sectional views of the multi-function safety device 200 according to an embodiment of the present invention. As shown in each figure, the multi-function safety device 200 according to an embodiment of the present invention includes the first valve body 10, a second valve body 20, the safety valve 30, the pneumatic test part 37, and the manual test part 38b. Hereinafter, this will be described in detail.

The first valve body 10 is a passage through which air moves, and a plurality of devices to be described later may be installed therein.

The first valve body 10 includes a first body 11, the first valve 13, a first cover 12, and a first spring 14, and a first accommodating space 11e for accommodating the second valve body 20 may be provided in the first body 11.

A connection passage 11c leading to the first accommodating space 11e is formed through the inside of the first body 11 in a circular shape, and a plurality of first body through passages 11a is formed inside the first body 11 in a direction perpendicular to the connection passage 11c to facilitate the movement of air of the pneumatic fender 100.

A first body flange 11f constituting the upper portion of the first body 11 and protruding in the lateral direction of the first body 11 may be provided on the first body 11.

The first body flange 11f is for firmly fixing the multi-function safety device 200 to the flange 120, and may have a through hole formed in at least portion thereof to be bolted and connected to the flange 120.

In the first body 11, a concentric first body inner jaw end 11g is formed inside the first body flange 11f to insert and fix the second valve body 20 and the safety valve 30, which will be described later.

The first valve 13 has a first guide rod 13a formed on one side so as to slide in a first through hole 12b formed in the center of the first cover 12, and a first spring 14 is mounted between the first valve jaw end 13b and the first jaw end 12a, and the first valve 13 is compressed and supported by the first spring 14 to be in close contact with or spaced apart from the first valve seat 11b.

For example, when the safety valve 30 and the second valve body 20 are detached for repair when the safety valve 30 and the second valve 22 are malfunctioning, the first valve 13 is in close contact with the first valve seat 11b, so that the inside 110 of the fender can be automatically blocked from the atmosphere.

For example, when the repair of the malfunctioning safety valve 30 and second valve 22 is completed and the safety valve 30 and the second valve body 20 are attached to the first valve body 10, a second guide rod 21e forcibly pushes the first valve 13 so that the first valve 13 is opened downward and the first valve 13 is spaced apart from the first valve seat 11b, so that the safety valve 30 and the inside 110 of the pneumatic fender can communicate with each other so that the pneumatic fender 100 is in a normal use state.

The second valve body 20 may include a second body 21, the second valve 22, and a second spring 24.

The second body 21 may be provided with a second body protruding jaw 21d that constitutes the upper portion of the second body 21 and protrudes in the lateral direction of the second body 21 to be seated on the first body inner jaw end 11g of the first valve body 10.

The second valve 22 to be described later is disposed on the lower portion of the second body 21, a second body through passage 21a for the movement of air in the first accommodating space 11e is formed in various directions on the circumference of the side of the second body 21, and a second accommodating space 21b for seating the safety valve 30 to be described later may be provided inside the second body 21.

A second valve through hole 22a is formed in the center of the second valve 22 and is inserted into the second guide rod 21e protruding from the second body 21 so that the second valve 22 slides. Accordingly, the second spring 24 is mounted between the second valve jaw end 22b and the second jaw end 21c formed on the second body 21, and the second valve 22 is compressed and supported by the second spring 24 so that it may be in close contact with or spaced apart from the second valve seat 11d formed on the first body 11.

For example, when testing the safety valve 30 by the pneumatic test part 37 to check the operating state of the safety valve 30, because a test pressure is higher than the pressure at the inside 110 of the pneumatic fender, the second valve 22 is in close contact with the second valve seat 11d, and the inside 110 of the fender can be automatically blocked from the atmosphere.

For example, during normal use of the safety valve 30 or during a test through the manual test part 38b, the second valve 22 is spaced apart from the second valve seat 11d by the internal pressure of the inside 110 of the pneumatic fender, so that the safety valve 30 and the inside 110 of the pneumatic fender can be communicated to each other.

As an example, the second valve 22 has one end supported by a compression spring, for example, supported by 60% or less of the initial internal pressure, and the other end in contact with the second valve seat 11d of the first valve body 10, so that the internal pressure of the pneumatic fender 100 and the opening pressure through the pneumatic test part 37 are transmitted to the second valve 22, whereby the opening and closing of the connection passage 11c can be controlled.

The safety valve 30 is inserted into the second accommodating space 21b of the second body 21 and is bolted and connected to the first body flange 11f.

At one upper side of the safety valve 30, the pneumatic test part 37 is installed, and an air passage 31e flowing from the pneumatic test part 37 into the safety valve 30 is formed.

In order to protect the disk 32 of the safety valve 30, a protective cover 38 is installed on the upper portion of the safety valve 30, and in the protective cover 38, the manual test part 38b is formed to manually test the safety valve 30, and a plurality of radially penetrating outlets 38a is formed to smoothly discharge the limit pressure of the pneumatic fender 100.

The safety valve 30 protects the pneumatic fender 100 by discharging the pressure reaching the set pressure by the flow energy of the ship to the atmosphere through the outlet 31d.

For example, the safety valve 30 includes a body 31, the disk 32, a stem 33, an adjustment nut 34, a spring support 35, and a compression spring 36.

The body 31 is a structure supporting the safety valve 30, a through hole 31b is provided therein, and the body protruding jaw 31f is inserted into a concentric first body inner jaw end 11g of the first body flange 11f and is seated in the second accommodating space 21b, the components including the stem 33, the adjustment nut 34, and the spring support 35 are installed inside the body 31.

The stem 33 is in the form of extending in the vertical direction in the second accommodating space 21b, and is provided with a threaded part 33b on the upper portion of the stem 33, and an inclined end part 33a having a section inclined outwardly from the stem 33 at a predetermined inclination on the lower portion of the stem 33.

The adjustment nut 34 has a second nut part 34b and a first nut part 34a formed at the upper and lower portions thereof, respectively, and a hollow bar-shaped guide part 34c extending downwardly.

The spring support 35 is disposed on the upper portion of the inclined end part 33a of the stem 33 and has an inclined surface 35b having an inclination in a shape corresponding to the inclined end part 33a of the stem 33. The spring support 35 is formed with a support through hole 35a into which the stem 33 can be inserted in the center.

By inserting the threaded part 33b of the stem 33 upward from the lower portion of the support through hole 35a formed in the center of the spring support 35, the inclined surface 35b of the spring support 35 and the inclined end part 33a of the stem 33 is coupled to each other.

One side of the compression spring 36 is coupled to the spring jaw 31a formed on the lower side of the body 31 of the safety valve 30, and the other side of the compression spring 36 is seated on the spring support 35. For example, the spring jaw 31a may have a stepped form as shown in FIG. 4.

The disk 32 has a shape extending downward from the flat upper portion, and a disk through hole 32a is formed in the center of the disk 32.

The guide part 34c of the adjustment nut 34 is inserted from the upper portion downward into the disk through hole 32a formed in the center of the disk 32, and penetrates the through hole 31b formed in the center of the body 31, so that the first nut part 34a configured in the lower portion of the adjustment nut 34 and the threaded part 33b of the stem 33 are screwed together.

Accordingly, the safety valve 30 can adjust the set pressure by adjusting the compression amount of the compression spring 36 according to the rotation amount of the adjustment nut 34.

Thereafter, air is supplied to the inside of the pneumatic fender 100 through the air injection valve 300 and expanded, and then the pneumatic fender is fixed to the berth or side of the ship with a rope.

Hereinafter, a method for checking the presence or absence of the abnormalities of the first valve 13, the second valve 22 and the safety valve 30 of the multi-function safety device 200 in the pneumatic fender 100 having the multi-function safety device 200 according to an embodiment of the present invention will be described.

Without releasing the internal pressure of the pneumatic fender 100, the test can be performed in two ways.

First, the manual test part 38b formed on the protective cover 38 may be used. After the threaded part of an auxiliary bolt (not shown) passes through the manual test part 38b and is screwed with the first nut part 34b formed on the upper portion of the adjustment nut 34, the disk 32 of the safety valve 30 is artificially risen and opened by rotating the auxiliary bolt clockwise, and the second valve 22 is opened by the internal pressure. Accordingly, air is discharged by passing through the first body through passage 11a, the connection passage 11c, the second body through passage 21a, the outlet 31d, and the outlet 38a. In this case, it can be checked whether the movement of air is detected. For example, a soap bubble test can be performed. Conversely, when the auxiliary bolt is rotated counterclockwise, the disk 32 of the safety valve 30 in the open state is closed by the restoring force of the compression spring 36. In this case, it can be checked whether there is an air leak. For example, a soap bubble test can be performed. When the check is complete, the auxiliary bolt (not shown) is completely removed from the manual test part 38b.

Second, the pneumatic test part 37 installed in the safety valve 30 may be used. Before opening the cap 37a of the pneumatic test part 37 and supplying air pressure, first check whether the internal pressure of the pneumatic fender 100 passes through the second valve 22 and the pneumatic test part 37 and is normally discharged. In this case, if the discharge pressure of the air is maintained, it is determined that the normal operation is performed. After that, when a test pressure higher than the internal pressure of the pneumatic fender 100 is applied to the pneumatic test part 37, the second valve 22 is automatically closed, and when the preset pressure is reached, it is checked whether the safety valve 30 operates. After the checking is completed, the test pressure is released, and it is checked whether the internal pressure of the pneumatic fender 100 is normally discharged through the pneumatic test part 37. After that, the pneumatic test part 37 is sealed with the cap 37a.

As such, in the present invention, unlike the conventional art, the periodic test of the safety valve 30 can be performed without the release process of the internal pressure of the pneumatic fender 100. For example, the operating state of the second valve 22 and the safety valve 30 can be checked with a safe and simple method by opening and closing the disk 32 of the safety valve 30 using the auxiliary bolt fastened to the manual test part 38b in a state where the internal pressure of the pneumatic fender 100 is not released. In some cases, it is possible to check the opening pressure of the safety valve 30 only by supplying the test pressure to the pneumatic test part 37. When the repair and replacement of the safety valve 30 is required, it can be performed without discharging the air at the inside 110 of the pneumatic fender by blocking the internal pressure of the pneumatic fender 100 with the first valve 13 even if the safety valve 30 is separated from the pneumatic fender 100. Accordingly, the safety and efficiency of work can be improved.

If the movement of air is not detected during the test of the safety valve 30 using the pneumatic test part 37 or the manual test part 38b, the safety valve 30 and the second valve body 20 are detached from the multi-function safety device 200, and the safety valve 30 and the second valve 22 are separated and repaired or replaced, and then they are reinstalled to the multi-function safety device 200, without performing the work of discharging the air at the inside 110 of the pneumatic fender to the atmosphere. After that, the checking of the operation of the second valve 22 and the safety valve 30 is performed in the above manner using the pneumatic test part 37 or the manual test part 38b, and then, the cap 37a of the pneumatic test part 37 is closed or the auxiliary bolt of the manual test part 38b is removed to convert the pneumatic fender 100 into a normal use state.

On the other hand, in the pneumatic fender 100 in normal use, the internal pressure of the pneumatic fender 100 continuously acts on the disk 32 of the safety valve 30 inserted and installed in the second accommodating space 21b. When the internal pressure of the multi-function safety device 200 reaches a preset pressure by the flow energy of a ship, the disk 32 of the safety valve 30 is opened to automatically release the air at the inside 110 of the pneumatic fender to the atmosphere, thereby protecting the pneumatic fender 100.

That is, the pneumatic fender 100 including the multi-function safety device 200 according to the present invention can test the abnormality of the safety valve 30 in use without separating the safety valve 30 installed in the second accommodating space 21b of the multi-function safety device 200, can easily separate and install the safety valve 30 without releasing the pressure at the inside 110 of the pneumatic fender 110, and can greatly improve work efficiency and worker safety compared to the conventional art. At the same time, since the conventional accommodating chamber installed in the pneumatic fender 100 becomes unnecessary, the weight and manufacturing cost can be significantly reduced compared to the safety device of the conventional pneumatic fender. In addition, the multi-function safety device 200 according to the present invention is compatible with the conventional pneumatic fender, so that it can be easily replaced with low cost and high efficiency.

As described above, the specific description of the present invention has been made by the embodiments with reference to the accompanying drawings, but since the above-described embodiments have only been described with preferred examples of the present invention, it should not be understood that the present invention is limited to the above embodiments, and the scope of the present invention should be understood as the following claims.

For example, the drawings are schematically shown with each component as a subject to help understanding, and the thickness, length, number, etc. of each illustrated component may differ from the actual one in the course of drawing creation. In addition, the material, shape, dimension, etc. of each component shown in the above embodiment are merely examples, and are not particularly limited, and various changes are possible within a range that does not substantially depart from the effects of the present invention.

### [Description of Reference Numerals]

- 10:: first valve body
- 11:: first body

- 11a:: first body through passage
- 11b:: fist valve seat
- 11c:: connection passage
- 11d:: second valve seat
- 11e:: first accommodating space
- 11f:: first body flange
- 11g:: first body inner jaw end
- 12:: first cover
- 12a:: first jaw end
- 12b:: first through hole
- 13:: first valve
- 13a:: first guide rod
- 13b:: first valve jaw end
- 14:: first spring
- 20:: second valve body
- 21:: second body
- 21a:: second body through pass
- 21b:: second accommodating space
- 21c:: second jaw end
- 21d:: second body protruding jaw
- 21e:: second guide rod
- 22:: second valve
- 22a:: second valve through hole
- 22b:: second valve jaw end
- 24:: second spring
- 30:: safety valve
- 31:: body
- 31a:: spring jaw
- 31b:: through hole
- 31c:: body seat
- 31d:: outlet
- 31e:: air passage
- 31f:: body protruding jaw
- 32:: disk
- 32a:: disk through hole
- 33:: stem
- 33a:: inclined end part
- 33b:: threaded part
- 34:: adjustment nut
- 34a:: first nut part
- 34b:: second nut part
- 34c:: guide part
- 35:: spring support
- 35a:: support through hole
- 35b:: inclined surface
- 36:: compression spring
- 37:: pneumatic test part
- 37a:: cap
- 38:: protective cover
- 38a:: outlet
- 38b:: manual test part
- 100:: pneumatic fender
- 110:: inside of pneumatic fender
- 120:: flange
- 200:: multi-function safety device
- 300:: air injection valve
- 400:: bracket of pneumatic fender

## Claims

1. A multi-function safety device (200) for a pneumatic fender (100) that is configured to be installed at a berth of a pier to serve as a buffer in case of collision between a ship and the berth, the multi-function safety device for the pneumatic fender comprising:
a first valve body (10) that is configured to be provided at an end of the pneumatic fender (100) and controls incoming and outgoing of air;
a first valve (13) that is installed so as to be detachable from the first valve body and is configured to open and close communication of air inside and outside the pneumatic fender by communicating an inside of the pneumatic fender with a first accommodating space (11e) provided in a first body included in the first valve body;
a second valve body (20) that is installed in the first accommodating space (11e) and is provided with a second accommodating space (21b) so that the air inside the pneumatic fender is accommodated through a second valve (22);
the second valve (22) that is disposed on a lower portion of the second valve body to prevent the air of a test pressure provided for a pneumatic test of a safety valve (30) from flowing into the pneumatic fender;
the safety valve (30) that is installed in the second accommodating space (21b) and is provided with an outlet for discharging the air to an outside through a through passage (11a) and a connection passage (11c) of the first valve body and a through passage (21a) of the second valve body when an internal pressure of the pneumatic fender is greater than or equal to a preset pressure;
a pneumatic test part (37) that is disposed in the safety valve and is provided to perform a pneumatic operation test of the safety valve; and
a manual test part (38b) that is disposed on a protective cover (38) formed on an upper portion of the safety valve and is provided for a manual operation test of the safety valve,
wherein the first valve (13), the second valve (22), the safety valve (30), the pneumatic test part (37), and the manual test part (38) are provided in the first valve body (10).

2. The multi-function safety device for the pneumatic fender according to claim 1, wherein the through passage (11a, 21a) for communicating between the inside of the pneumatic fender and the safety valve (30) is provided in the first valve body (10) and the second valve body (20), and the opening and closing of the first valve (13) and the second valve (22) are automatically controlled by a use condition including a pressure applied to the pneumatic fender.

3. The multi-function safety device for the pneumatic fender according to claim 2, wherein the connection passage (11c) connected to the through passage under the safety valve is provided in the first valve body (10).

4. A method for checking a pneumatic fender by using the multi-function safety device for the pneumatic fender according to any one of claims 1 to 3, the method comprises at least one of:
after allowing a threaded part of an auxiliary bolt to pass through the manual test part (38b), checking whether a disk (32) of the safety valve (30) is open by using the auxiliary bolt; and
after allowing a compressed air to pass through the pneumatic test part (37) and to be supplied to the second accommodating space (21b) in which the safety valve is installed, checking an opening pressure,
wherein the method is performed in a state in which the internal pressure of the pneumatic fender is not released by the manual test part or the pneumatic test part.

5. The method for checking a pneumatic fender according to claim 4, wherein the connection passage (11c) connected to the through passage under the safety valve (30) is provided in the first valve body (10), and when the safety valve and the second valve body (20) are detached, the inside of the pneumatic fender and the connection passage are blocked by the first valve, so that the method is performed in a state in which the internal pressure of the pneumatic fender is not released.

6. The method for checking a pneumatic fender according to claim 4, further comprising replacing the safety valve (30) in a state in which the air inside the pneumatic fender is not released to an atmosphere.

## Patentansprüche

1. Multifunktions-Sicherheitsvorrichtung (200) für einen pneumatischen Fender (100), der dazu ausgestaltet ist, an einem Liegeplatz eines Piers installiert zu werden, um im Falle einer Kollision zwischen einem Schiff und dem Liegeplatz als Puffer zu dienen, wobei die Multifunktions-Sicherheitsvorrichtung für den pneumatischen Fender umfasst:
einen ersten Ventilkörper (10), der dazu ausgestaltet ist, an einem Ende des pneumatischen Fenders (100) vorgesehen zu werden, und das Ein- und Ausströmen von Luft steuert,
ein erstes Ventil (13), das so installiert ist, dass es von dem ersten Ventilkörper lösbar ist und dazu ausgestaltet ist, eine Verbindung von Luft innerhalb und außerhalb des pneumatischen Fenders zu öffnen und zu schließen, indem es eine Innenseite des pneumatischen Fenders mit einem ersten Aufnahmeraum (11e) verbindet, der in einem ersten, in dem ersten Ventilkörper enthaltenen Körper vorgesehen ist,
einen zweiten Ventilkörper (20), der in dem ersten Aufnahmeraum (11e) installiert ist und mit einem zweiten Aufnahmeraum (21b) versehen ist, so dass die Luft innerhalb des pneumatischen Fenders durch ein zweites Ventil (22) aufgenommen wird,
das zweite Ventil (22), das an einem unteren Abschnitt des zweiten Ventilkörpers angeordnet ist, um zu verhindern, dass die Luft eines Prüfdrucks, die für eine pneumatische Prüfung eines Sicherheitsventils (30) vorgesehen ist, in den pneumatischen Fender strömt,
das Sicherheitsventil (30), das in dem zweiten Aufnahmeraum (21b) installiert ist und mit einem Auslass zum Ablassen der Luft nach außen durch einen Durchgangskanal (11a) und einen Verbindungskanal (11c) des ersten Ventilkörpers und einen Durchgangskanal (21a) des zweiten Ventilkörpers versehen ist, wenn ein Innendruck des pneumatischen Fenders größer oder gleich einem voreingestellten Druck ist,
ein pneumatisches Prüfteil (37), das in dem Sicherheitsventil angeordnet ist und dazu vorgesehen ist, eine pneumatische Funktionsprüfung des Sicherheitsventils durchzuführen, und
ein manuelles Prüfteil (38b), das auf einer Schutzabdeckung (38) angeordnet ist, die an einem oberen Abschnitt des Sicherheitsventils ausgebildet ist und für eine manuelle Funktionsprüfung des Sicherheitsventils vorgesehen ist,
wobei das erste Ventil (13), das zweite Ventil (22), das Sicherheitsventil (30), das pneumatische Prüfteil (37) und das manuelle Prüfteil (38) in dem ersten Ventilkörper (10) vorgesehen sind.

2. Multifunktions-Sicherheitsvorrichtung für den pneumatischen Fender nach Anspruch 1, wobei der Durchgangskanal (11a, 21a) zur Verbindung zwischen der Innenseite des pneumatischen Fenders und dem Sicherheitsventil (30) in dem ersten Ventilkörper (10) und dem zweiten Ventilkörper (20) vorgesehen ist, und das Öffnen und Schließen des ersten Ventils (13) und des zweiten Ventils (22) automatisch durch einen Gebrauchszustand gesteuert werden, der einen auf den pneumatischen Fender ausgeübten Druck beinhaltet.

3. Multifunktions-Sicherheitsvorrichtung für den pneumatischen Fender nach Anspruch 2, wobei der Verbindungskanal (11c), der mit dem Durchgangskanal unter dem Sicherheitsventil verbunden ist, in dem ersten Ventilkörper (10) vorgesehen ist.

4. Verfahren zum Überprüfen eines pneumatischen Fenders unter Verwendung der Multifunktions-Sicherheitsvorrichtung für den pneumatischen Fender nach einem der Ansprüche 1 bis 3, wobei das Verfahren mindestens eines von Folgendem umfasst:
nachdem ein Gewindeteil eines Hilfsbolzens durch das manuelle Prüfteil (38b) hindurchgehen gelassen wurde, Überprüfen, ob ein Teller (32) des Sicherheitsventils (30) geöffnet ist, unter Verwendung des Hilfsbolzens, und
nachdem eine Druckluft durch das pneumatische Prüfteil (37) hindurchströmen gelassen und dem zweiten Aufnahmeraum (21b) zugeführt wurde, in dem das Sicherheitsventil installiert ist, Überprüfen eines Öffnungsdrucks,
wobei das Verfahren in einem Zustand durchgeführt wird, in dem der Innendruck des pneumatischen Fenders nicht durch das manuelle Prüfteil oder das pneumatische Prüfteil abgelassen wird.

5. Verfahren zum Überprüfen eines pneumatischen Fenders nach Anspruch 4, wobei der Verbindungskanal (11c), der mit dem Durchgangskanal unter dem Sicherheitsventil (30) verbunden ist, in dem ersten Ventilkörper (10) vorgesehen wird, und wenn das Sicherheitsventil und der zweite Ventilkörper (20) gelöst werden, das Innere des pneumatischen Fenders und der Verbindungskanal durch das erste Ventil blockiert werden, so dass das Verfahren in einem Zustand durchgeführt wird, in dem der Innendruck des pneumatischen Fenders nicht abgelassen wird.

6. Verfahren zum Überprüfen eines pneumatischen Fenders nach Anspruch 4, ferner umfassend Austauschen des Sicherheitsventils (30) in einem Zustand, in dem die Luft innerhalb des pneumatischen Fenders nicht an die Atmosphäre abgegeben wird.

## Revendications

1. Dispositif de sécurité multifonction (200) pour une défense pneumatique (100) qui est configuré pour être installé au niveau d'un poste d'amarrage d'une jetée pour servir d'amortisseur en cas de collision entre un navire et le poste d'amarrage, le dispositif de sécurité multifonction pour la défense pneumatique comprenant :
un premier corps de valve (10) qui est configuré pour être prévu au niveau d'une extrémité de la défense pneumatique (100) et commande l'entrée et la sortie de l'air ;
une première valve (13) qui est installée pour être détachable du premier corps de valve et est configurée pour ouvrir et fermer la communication de l'air à l'intérieur et à l'extérieur de la défense pneumatique en faisant communiquer un intérieur de la défense pneumatique avec un premier espace de logement (11e) prévu dans un premier corps compris dans le premier corps de valve ;
un deuxième corps de valve (20) qui est installé dans le premier espace de logement (11e) et est prévu avec un deuxième espace de logement (21b) de sorte que l'air à l'intérieur de la défense pneumatique est logé par le biais d'une deuxième valve (22) ;
la deuxième valve (22) qui est disposée sur une partie inférieure du deuxième corps de valve pour empêcher l'air d'une pression de test fournie pour un test pneumatique d'une valve de sécurité (30), de s'écouler dans la défense pneumatique ;
la valve de sécurité (30) qui est installée dans le deuxième espace de logement (21b) et est prévue avec une sortie pour décharger l'air à l'extérieur par un passage débouchant (11a) et un passage de raccordement (11c) du premier corps de valve et un passage débouchant (21a) du deuxième corps de valve lorsqu'une pression interne de la défense pneumatique est supérieure ou égale à une pression préétablie ;
une partie de test pneumatique (37) qui est disposée dans la valve de sécurité et est prévue pour réaliser un test de fonctionnement pneumatique de la valve de sécurité ; et
une partie de test manuelle (38b) qui est disposée sur un couvercle de protection (38) formé sur une partie supérieure de la valve de sécurité et est prévue pour un test de fonctionnement manuel de la valve de sécurité,
dans lequel la première valve (13), la deuxième valve (22), la valve de sécurité (30), la partie de test pneumatique (37) et la partie de test manuelle (38) sont prévues dans le premier corps de valve (10).

2. Dispositif de sécurité multifonction pour la défense pneumatique selon la revendication 1, dans lequel le passage débouchant (11a, 21a) pour communiquer entre l'intérieur de la défense pneumatique et la valve de sécurité (30) est prévu dans le premier corps de valve (10) et le deuxième corps de valve (20), et l'ouverture et la fermeture de la première valve (13) et de la deuxième valve (22) sont automatiquement commandées par une condition d'utilisation comprenant une pression appliquée sur la défense pneumatique.

3. Dispositif de sécurité multifonction pour la défense pneumatique selon la revendication 2, dans lequel le passage de raccordement (11c) raccordé au passage débouchant sous la valve de sécurité est prévu dans le premier corps de valve (10).

4. Procédé pour vérifier une défense pneumatique en utilisant le dispositif de sécurité multifonction pour la défense pneumatique selon l'une quelconque des revendications 1 à 3, le procédé comprend au moins l'un des faits suivants :
après avoir autorisé une partie filetée d'un boulon auxiliaire à passer par la partie de test manuelle (38b), vérifier si un disque (32) de la valve de sécurité (30) est ouvert en utilisant le boulon auxiliaire ; et
après avoir autorisé un air comprimé à passer par la partie de test pneumatique (37) et à être fourni au deuxième espace de logement (21b) dans lequel la valve de sécurité est installée, vérifier une pression d'ouverture,
dans lequel le procédé est réalisé dans un état dans lequel la pression interne de la défense pneumatique n'est pas libérée par la partie de test manuelle ou la partie de test pneumatique.

5. Procédé pour vérifier une défense pneumatique selon la revendication 4, dans lequel le passage de raccordement (11c) raccordé au passage débouchant sous la valve de sécurité (30) est prévu dans le premier corps de valve (10) et lorsque la valve de sécurité et le deuxième corps de valve (20) sont détachés, l'intérieur de la défense pneumatique et le passage de raccordement sont bloqués par la première valve, de sorte que le procédé est réalisé dans un état dans lequel la pression interne de la défense pneumatique n'est pas libérée.

6. Procédé pour vérifier une défense pneumatique selon la revendication 4, comprenant en outre le fait de remplacer la valve de sécurité (30) dans un état dans lequel l'air à l'intérieur de la défense pneumatique n'est pas libéré dans une atmosphère.
